# EUROPEAN PATENT APPLICATION

(11) **EP 2 471 872 A1**
(43) Date of publication of application: **04.07.2012**
(21) Application number: 10848930.3
(22) Date of filing: 31.03.2010
(51) Int. Cl.: C08L 101/00, C08L 83/04

(54) **LIGHT-DIFFUSING RESIN COMPOSITION AND LIGHT-DIFFUSING MOLDED BODY**

(71) Applicant: Takemoto Yushi Kabushiki Kaisha, Gamagori-shi Aichi 4438611 (JP)
(72) Inventor: SAITO Chiaki, Gamagori-shi Aichi 443-8611 (JP); ISHIKAWA Fumiyoshi, Gamagori-shi Aichi 443-8611 (JP)
(74) Representative: Wallace, Sheila Jane
(86) International application number: PCT/JP2010/055830
(87) International publication number: WO 2011/121752

(57) **Abstract**

Optical diffusive resin compositions are presented, capable of yielding optical diffusive moldings that are superior not only in rigidity and dimensional stability but also in heat resistance, optical transmissivity and optical diffusivity, as well as optical diffusive moldings molded by using them. Such optical diffusive resin compositions contain for 100 mass parts of a thermoplastic polymer material 0.1-10 mass parts of organosilicone fine particles of a specific kind comprising polysiloxane cross-linking structures, each particle having a hollow hemispherical shape as a whole, having a cross-sectional shape with an inner minor arc, an outer minor arc which covers it and ridge lines connecting their ends.

## Description

### Background of the Invention

This invention relates to optical diffusive resin compositions and optical diffusive moldings. Optically diffusive molded products (herein referred to as optical diffusive moldings) such as optical diffusive plates for backlighting liquid crystal display, anti-reflective films, optically diffusive films, light guides, illumination covers, reflective screens and transmissive screens are widely being used in recent years. Such optical diffusive moldings are required to be superior not only in rigidity and dimensional stability but also in heat resistance, optical transmissivity and optical diffusivity. This invention relates to optical diffusive resin compositions from which such optical diffusive moldings satisfying such requirements can be obtained, as well as to optical diffusive moldings molded by using such optical diffusive resin compositions.

Many kinds of optical diffusive resin compositions such as thermoplastic polymer materials containing non-silicone organic fine particles such as polystyrene fine particles, polyacryl fine particles and their compound fine particles have been known, as disclosed, for example, in Japanese Patent Publications Tokkai 3-143950, 2004-149610, 2003-82114, 2002-30151, 2001-194513 and 2003-183410, as well as those containing silicone organic fine particles, as disclosed, for example, in Japanese Patent Publication Tokkai 2-194058. These prior art optical diffusive resin compositions, however, have the problem that the optical diffusive moldings obtained by using them cannot sufficiently respond to the advanced requirements of the recent years imposed on them.

### Summary of the Invention

It is therefore an object of this invention to provide optical diffusive resin compositions capable of yielding optical diffusive moldings that are superior not only in rigidity and dimensional stability but also in heat resistance, optical transmissivity and optical diffusivity, as well as optical diffusive moldings molded by using such optical diffusive resin compositions.

The inventors herein have carried out investigations in order to solve the aforementioned problems and discovered as a result thereof that what is suitable is to use a certain specified kind of organosilicone fine particles, among many kinds of fine particles which are themselves already known.

### Brief Description of the Drawings

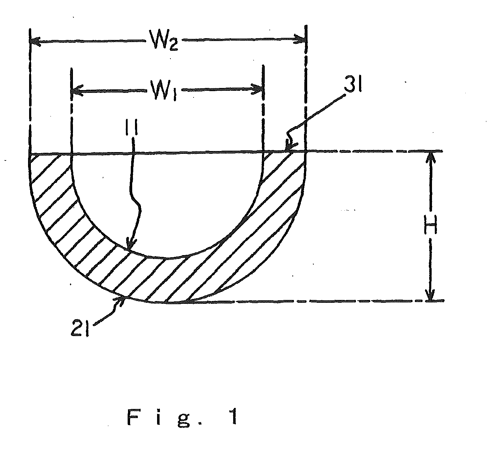

Fig. 1 is an enlarged sectional view for approximately showing an organosilicone fine particle used for optical diffusive resin compositions according to this invention.

### Detailed Description of the Invention

This invention relates to optical diffusive resin compositions characterized as containing organisilicone fine particles of a specified kind in an amount of 0.1-10 mass parts per 100 mass parts of a thermoplastic polymer material, as well as optical diffusive moldings molded by using such optical diffusive resin compositions.

Organosilicone fine particles of the aforementioned specified kind are each a particle having a hollow hemispherical shape as a whole, having a cross-sectional shape formed with an inner minor arc 11, an outer minor arc 21 which covers it and ridge lines 31 connecting their ends, the average width W₁, between the end points of the inner minor arc 11 being 0.01-9.5µm, the average width W₂ between the end points of the outer minor arc 21 being 0.05-10µm, and the average of the height H of the outer minor arc 21 being 0.015-9µm. In the above, the average values are those taken from arbitrarily selected 100 organosilicone fine particles on a scanning electron microscope image.

Optical diffusive resin compositions according to this invention (hereinafter referred to as optical diffusive resin compositions of this invention) are explained first. Optical diffusive resin compositions of this invention are characterized as comprising a thermoplastic polymer material containing an aforementioned specified kind of organosilicone find particles at a specified ratio.

Fig. 1 is an enlarged sectional view for approximately showing an organosilicone fine particle used for optical diffusive resin compositions according to this invention. Organosilicone fine particles for optical diffusive resin compositions of this invention are themselves of a known kind, as disclosed in Japanese Patent Publication Tokkai 2009-114330. Such organosilicone fine particles each comprise a polysiloxane cross-link structure, having a hollow hemispherical shape as a whole, having a cross-sectional shape formed with an inner minor arc 11, an outer minor arc 21 which covers it and ridge lines 31 connecting their ends. The average width, W₁ between the end points of the inner minor arc 11 is 0.01-9.5µm, the average width W₂ between the end points of the outer minor arc 21 is 0.05-10µm, and the average of the height H of the outer minor arc 21 is 0,015-9µm, but those having the average width W₁ between the end points of the inner minor arc 11 being 0.02-6µm, the average width W₂ between the end points of the outer minor arc 21 being 0.06-8µm, and the height H of the outer minor arc 21 being 0.03-6µm are preferable.

In the above, the average of the width W₁ between the end points of the inner minor arc 11, the average of the width W₂ between the end points of the outer minor arc 21 and the average of the height H of the outer minor arc 21 are each a value obtained by measuring on arbitrarily selected 100 organosilicone fine particles on an scanning electron microscope image and taking the average of the measured values.

Organosilicone fine particles to be used for optical diffusive resin compositions of this invention are polysiloxane cross-link structures with siloxane units forming three-dimensional network structures. Although the invention does not impose any particular limitation on the kind or ratio of the siloxane units comprising the polysiloxane cross-link structures, those comprising siloxane units shown by SiO₂ and siloxane units shown by R¹SiO_{1.5} where R¹ is organic group with 1-12 carbon atoms directly connected to a silicon atom are preferable, those containing siloxane units shown by SiO₂ and siloxane units shown by R¹SiO_{1.5} at a molar ratio in the range of 30/70 - 70/30 being preferable and a molar ratio in the range of 30/70 - 40/60 being more preferable.

Examples of R¹ include organic groups with 1-12 carbon atoms such as alkyl group, cycloalkyl group, aryl group, alkylaryl group and aralkyl group, but alkyl groups with 1-4 carbon atoms such as methyl group, ethyl group, propyl group and butyl group or phenyl group are preferable, and methyl group is even more preferable. If R¹ is such a group, preferable examples of siloxane unit shown by R¹SiO_{1.5} include methyl siloxane unit, ethyl siloxane unit, propyl siloxane unit, butyl siloxane unit and phenyl siloxane unit, but methyl siloxane unit is more preferable.

The invention does not impose any particular limitation on the method of producing organosilicone fine particles for optical diffusive resin compositions of this invention, but a preferable production method is by using silanol group forming silicide SiX₄. and silanol group forming silicide R²SiY₃ at a molar ratio of 30/70 - 70/30, and more preferably 30/70 - 40/60, where R² is an organic group with 1-12 carbon atoms directly connected to a silicon atom and X and Y are each alkoxy group with 1-4 carbon atoms, alkoxyethoxy group having alkoxy group with 1-4 carbon atoms, acyloxy group with 2-4 carbon atoms, N,N-dialkylamino group having alkyl group with 1-4 carbon atoms, hydroxyl group, halogen atom or hydrogen atom, obtained by firstly generating silanol compounds by causing them to contact water in the presence of a catalyst and then causing a condensation reaction of these silanol compounds.

Silanol group forming silicide SiX₄ is a compound which eventually forms siloxane unit SiO₂. Examples of X in SiX₄ include (1) alkoxy groups with 1-4 carbon atoms such as methoxy group and ethoxy group, (2) alkoxyethoxy groups having alkoxy group with 1-4 carbon atoms such as methoxyethoxy group and butoxyethoxy group, (3) acyloxy groups with 2-4 carbon atoms such as acetoxy group and propyoxy group, (4) N,N-dialkylamino groups having alkyl group with 1-4 carbon atoms such as dimethylamino group and diethylamino group, (5) hydroxyl group, (6) halogen atoms such as chlorine atom and bromine atom, and (7) hydrogen atom.

Examples of silanol group forming silicide SiX₄ include tetramethoxy silane, tetraethoxy silane, tetrabutoxy silane, trimethoxyethoxy silane, tributoxyethoxy silane, tetraacetoxy silane, tetrapropoxy silane, tetra(dimethylamino) silane, tetra(diethylamino) silane, tetrahydroxy silane, chlorosilane triol, dichlorodisilanol, tetrachlorosilane, and chlorotrihydrogen silane, among which tetramethoxy silane, tetraethoxy silane and tetrabutoxy silane are preferred.

Silanol group forming silicide R²SiY₃ is a compound which eventually forms siloxane units R¹SiO_{1.5}. Y in R²SiY₃ is similar to X in SiX₄ and R² in R²SiY₃ is similar to R¹ in R¹SiO_{1.5}.

Examples of silanol group forming silicide R²SiY₃ include methyltrimethoxy silane, ethyltriethoxy silane, propyltributoxy silane, butyltributoxy silane, phenyltris(2-methoxyethoxy)silane, methyltris(2-butoxyethoxy)silane, methyltriacetoxysilane, methyltripropoxy silane, methylsilanetriol, methylchlorodisilanol, methyltrichlorosilane, and methyltrihydrogen silane. As explained above regarding R¹ in siloxane units R¹SiO_{1.5}, however, those silanol group forming silicides which eventually form methyl siloxane unit, ethyl siloxane unit, propyl siloxane unit, butyl siloxane unit, or phenyl siloxane unit are preferred, and those silanol group forming silicides which come to form methyl siloxane group are more preferred.

For producing organosilicone fine particles, silanol group forming silicide SiX₄ and silanol group forming silicide R²SiY₃ are used at a molar ratio in the range of 30/70-70/30 or more preferably in the range of 30/70 - 40/60, and they are firstly caused to undergo hydrolysis by contacting water in the presence of a catalyst so as to produce a silanol compound.. A known kind of catalyst may be employed for the hydrolysis. Examples of such known catalyst include inorganic bases such as sodium hydroxide, potassium hydroxide, sodium carbonate, sodium bicarbonate and ammonia and organic bases such as trimethylamine, triethylamine, tetraethyl ammonium hydroxide, dodecyls dimethyl hydroxyl ethyl ammonium hydroxide and sodium methoxide as examples of basic catalyst. Examples of acidic catalyst include inorganic acids such as hydrochloric acid, sulfuric acid and phosphoric acid and organic acids such as acetic acid, citric acid, methane sulfonic acid, p-toluene sulfonic acid, dodecyl benzene sulfonic acid and dodecyl sulfonic acid.

When silanol group forming silicide SiX₄ and silanol group forming silicide R²SiY₃ are caused to contact with water in the presence of a catalyst for hydrolysis, the silanol group forming silicides and the catalyst are usually added to water with stirring and the point in time when the silanol group forming silicides not soluble in water disappear from the reacting system and a uniform liquid layer is formed is considered the end of the hydrolysis. Since the reactivity in hydrolysis varies, depending on the kind of silanol group forming silicide, on the basis of difference in dispersion characteristic in water in addition to the inherent differences in reactivity, the kind of catalyst to be added to the reaction system, as well as its quantity to be added, the reaction temperature, etc. is appropriately selected. For facilitating the contact between the silanol group forming silicides and water, however, a surfactant may sometimes be added to the reaction system.

A nonionic surfactant or an anionic surfactant of a known type may be added to the reaction system together with a catalyst. Examples of nonionic surfactant include those with polyoxyalkylene group having α-alkyl-ω-hydroxy (polyoxy alkylene), α-(p-alkylphenyl)-ω-hydroxy (polyoxy alkylene), polyoxyalkylene aliphatic ester or polyoxyalkylene castor oil having oxyethylene group and/or oxypropylene as oxyalkylene group. Among the above, α-alkyl-ω-hydroxy (polyoxy alkylene) is preferable, and α-dodecyl-ω-hydroxy poly(oxyethylene) (with 6-16 oxyethylene units) is more preferable.

Examples of anionic surfactant include organic sulfates with 8-18 carbon atoms such as octyl sulfate, cetyl sulfate and lauryl sulfate and organic sulfonates with 8-30 carbon atoms such as octyl sulfonate, cetyl sulfonate, lauryl sulfonate, stearyl sulfonate, oleyl sulfonate, p-toluene sulfonate, dodecyl benzene sulfonate, oleyl benzene sulfonate, naphthyl sulfonate and diisopropyl naphthyl sulfonate. Among these, organic sulfonates with 8-30 carbon atoms are preferable, and dodecyl benzene sulfonate is more preferable.

When a surfactant should be caused to be present in the reaction system, a nonionic or anionic surfactant of the kind described above may be used singly but they may also be used together. In such a situation, the concentration of each surfactant is preferably in the range of 0.001 - 0.05 mass % in the case of a nonionic surfactant and 0.005 -0.55 mass % in the case of an anionic surfactant, independent of whether they are used singly or both together.

The mass ratio between water and the total of silanol group forming silicides to be used is normally 10/90 - 70/30. The amount of catalyst to be used varies, depending on its kind as well as on the kind of the silanol group forming silicide, but it is preferably 1 mass % or less with respect to the total amount of the silanol group forming silicide. The temperature of the hydrolysis is usually set to 0 - 40°C but it is preferable to set it at 30°C or less in order to avoid any instantly occurring condensation reaction of the silanol which has been generated by the hydrolysis and it is more preferable to set it at 5 - 20°C.

Silanol group forming SiX₄ and silanol group forming silicide R²SiY₃ may be added into water together to carry out the hydrolysis reaction or they may be added sequentially as the hydrolysis reaction is carried out. If the speed of hydrolysis reaction is significantly different between the silanol group forming silicides that are being used, it is preferable to carry out the hydrolysis of the silanol group forming silicide with the slower speed of hydrolysis first and then to add the silanol group forming silicide with the faster speed of hydrolysis to continue the hydrolysis reaction.

Organosilicone fine particles having desired hollow hemispherical shapes are generated by using the reaction liquid containing the silanol compounds thus generated in a subsequent condensation reaction. By the production method according to the present invention, since the catalyst for the hydrolysis can be used also as the catalyst for the condensation reaction, the reaction liquid containing silanol compounds generated by the hydrolysis can be used for the condensation reaction either directly or by further adding a catalyst so as to continue the reaction by raising the temperature to 30 - 80°C for a condensation reaction to obtain organosilicone fine particles as their aqueous suspension. After the condensation reaction of the silanol compound, it is preferable to add an alkali such as ammonia, sodium hydroxide and potassium hydroxide to adjust the pH of the aqueous suspension to the range of 8-10, and more preferably to the range of 8-9.5. As for the solid component density of the aqueous suspension after the condensation reaction of the silanol compound (density of organosilicone fine particles), it is preferable to adjust it to the range of 2-12 mass %, and more preferably to the range of 5-9 mass %, and particularly preferably to the range of 7-8.5 mass%.

Organosilicone fine particles may be used as an aqueous material with the solid component adjusted to be 30-70 mass % by separating from the aforementioned aqueous suspension, say, by passing through a metallic net and through centrifugation or pressure filtration. Such an aqueous material may be further heated and dehydrated at 100-250°C and crushed, if necessary, and used as a dried material.

Organosilicone fine particles thus obtained are each a particle having a hollow hemispherical shape as a whole, having a cross-sectional shape formed with an inner minor arc 11, an outer minor arc 21 which covers it and ridge lines 31 connecting their ends, the average width W₁ between the end points of the inner minor arc 11 being 0.01-9.5µm, the average width W₂ between the end points of the outer minor arc 21 being 0.05-10µm, and the average of the height H of the outer minor arc 21 being 0.015-9µm.

Examples of thermoplastic polymer materials that may be used for optical diffusive resin compositions of this invention include (1) polycarbonate polymer materials; (2) polyacryl polymer materials such as polymethyl methacrylate (hereinafter referred to simply as PMMA); (3) polystyrene polymer materials such as polystyrene, acrylonitril-styrene copolymers, and acrylonitril-butadien-styrene copolymers (hereinafter referred to simply as ABS); (4) polyester polymer materials such as polyethylene terephthalate, polyethylene isophthalate, polybutylene terephthalate, and polyethylene naphthalate; (5) polyvinyl polymer materials such as polyvinyl chloride, and polyvinyl acetate; (6) polyolefin polymer materials such as polyethylene and polypropylene (hereinafter referred to simply as PP); and (7) polymer blends and polymer alloys of two or more thermoplastic polymer materials selected from aforementioned (1)-(6). Among the above, those selected from polycarbonate polymer materials, polyacryl polymer materials, polyester polymer materials, polyvinyl polymer materials and polyolefin polymer materials are preferable from the point of view of the degree of manifested effects, and polycarbonate polymer materials and/or polyacryl polymer materials are more preferable.

Optical diffusive resin compositions of this invention are characterized as containing aforementioned organosilicone fine particles in an amount of 0.1-10 mass parts, more preferably 0.3-7 mass parts and even more preferably 0.5-5 mass parts, per 100 mass parts of thermoplastic polymer materials as described above.

Optical diffusive moldings according to this invention (hereinafter referred to as optical diffusive moldings of this invention) are explained next. Optical diffusive moldings of this invention are characterized as being those obtained by using optical diffusive resin compositions of this invention and molding by a known molding method. Examples of molding method that may be used include injection molding, extrusion molding, blow molding, inflation molding, profile extrusion, injection blow molding, vacuum pressure molding, hot pressing molding and spinning.

Since optical diffusive moldings of this invention are superior not only in rigidity and dimensional stability but also in resistance against heat, light transmissivity and light diffusivity, they are useful as optical diffusive plates for backlighting liquid crystal display, anti-reflective films, optically diffusive films, light guides, illumination covers, reflective screens and transmissive screens.

The use of optical diffusive resin compositions of this invention has the advantage of obtaining optical diffusive moldings that are superior not only in rigidity and dimensional stability but also in resistance against heat, light transmissivity and light diffusivity.

In what follows, the invention will be described in terms of test examples but they are not intended to limit the scope of the invention. In the following test examples and comparison examples, "part" will mean "mass part" and "%" will mean "mass %".

### Part 1: Synthesis of organosilicone fine particles

### Synthesis of organosilicone fine particles (T-1)

Ion exchange water 700g was taken into a reactor vessel and 48% aqueous solution of sodium hydroxide 0.3g was added thereinto to obtain an aqueous solution. Methyl trimethoxy silane 81.7g (0.6 mols) and tetraethoxy silane 83.2g (0.4 mols) were added to this aqueous solution and after a hydrolysis reaction was carried out for one hour such that the temperature would not exceed 30°C, 10% dodecyl benzene sodium sulfonate aqueous solution 3g was further added as surfactant to carry out a condensation reaction at the same temperature for 3 hours. Next, a condensation was carried out for 10 hours with the obtained reaction product to obtain an aqueous suspension containing organosilicone fine particles. This aqueous suspension was subjected to centrifugation to separate out white fine particles to obtain an aqueous material (with solid component about 40%) of organosilicone fine particles (T-1). This aqueous material of organosilicone fine particles (T-1) was dried with heated air for 5 hours at 150°C and was found to be 60.1g. This material dried with heated air was subjected to observation by a scanning electron microscope, elemental analysis, inductively coupled plasma spectrometry, and FT-IR spectrometry, and it was found that these organosilicone fine particles (T-1) were of a hollow hemispherical shape as a whole, formed, when observed cross-sectionally by a microscope, with an inner minor arc 11, an outer minor arc 21 which covers it and ridge lines 31 connecting their ends, the average width W₁ between the end points of the inner minor arc 11 being 2.64µm, the average width W₂ between the end points of the outer minor arc 21 being 3.02µm, and the average of the height H of the outer minor arc 21 being 1.53µm, and comprising polysiloxane cross-link structures having siloxane imits shown by SiO₂ and siloxane units shown by R¹SiO_{1.5} at a molar ratio of 40/60.

In the above, the shapes of organosilicone fine particles (T-1), the average width W₁ between the end points of the inner minor arc 11, the average width W₂ between the end points of the outer minor arc 21, and the average height H of the outer minor arc are values obtained by using a scanning electron microscope to observe arbitrarily selected 100 organosilicone fine particles (T-1) at magnification 5000-10000 to measure corresponding portions and taking averages. The linking organic groups were analyzed by measuring organosilicone fine particles (T-1) 5g accurately, adding it to 0.05N aqueous solution 250ml of sodium hydroxide to extract all hydrolyzable groups in organosilicone fine particles into the aqueous solution. Organosilicone fine particles were separated by ultracentrifugation from the extraction-processed liquid and after the separated organosilicone fine particles were washed with water and dried for 5 hours at 200°C, they were subjected to elemental analysis, inductively coupled plasma spectrometry, and FT-IR spectrometry for measuring the total contained amounts of carbon and silicon and checking the silicon-carbon bond and silicon-oxygen-silicon bond. From such analyzed values and the number of carbon atoms of R² of silanol group forming silicide R²SiY₃ used as material, the ratio between siloxane units shown by SiO₂ and siloxane units shown by R¹SiO_{1.5} was calculated.

### Synthesis of organosilicone fine particles (T-2) and (T-3)

Organosilicone fine particles (T-2) and (T-3) were prepared like organosilicone fine particles (T-1) and subjected to measurements and analyses.

### Synthesis of organosilicone fine particles (t-1) for comparison

Ion exchange water 3950g and 28% ammonia water 50g were taken into a reactor vessel to obtain a uniform aqueous ammonia solution by stirring for 10 minutes at room temperature. Methyl trimethoxy silane 600g (4.41 mols) was added to this aqueous ammonia solution so as not to become mixed in the aqueous ammonia solution such that a two-layer condition is obtained with a methyl trimethoxy silane layer as the upper layer and an aqueous ammonia solution layer as the lower layer. This was slowly stirred such that this two-layer condition was maintained and hydrolysis and condensation reaction would proceed at the boundary surface between methyl trimethoxy silane and aqueous ammonia solution. As the reaction progressed, reaction products slowly precipitated such that the lower layer became turbid while the upper methyl trimethoxy silane layer gradually became thin, disappearing in about 3 hours. Temperature was maintained at 50-60°C and after three hours of stirring under the same condition, it was cooled to 25°C and suspended materials were filtered away to obtain an aqueous material of white fine particles (t-1). This aqueous material was washed with water and after it was dried with heated air for 3 hours at 150°C, the dried matter thus obtained was subjected to measurements and analyses as in Test Example to find out that they were solid spherical organosilicone fine particles with average diameter of 3.0µm. Details of each kind of organosilicone fine particles synthesized as explained above are summarized in Tables 1-4.

**Table 1**

| | Siloxane units shown by SiO₂ (A) | | Siloxane units shown by R¹SiO_{1.5} (B) | | A/B (molar ratio) |
|---|---|---|---|---|---|
| | Kind | Ratio (molar %) | Kind | Ratio (molar %) | |
| T-1 | S-1 | 40 | S-2 | 60 | 40/60 |
| T-2 | S-1 | 30 | S-2 | 70 | 30/70 |
| T-3 | S-1 | 40 | S-2/S-3 | 55/5 | 40/60 |
| t-1 | - | - | S-2 | 100 | 0/100 |

| | | | | | |
|---|---|---|---|---|---|
| In Table 1: A/B: Molar ratio of (Siloxane units shown by SiO₂) / (Siloxane units shown by R¹SiO_{1.5} ) S-1: Anhydrous silicic acid unit S-2: Methyl siloxane unit S-3: Phenyl siloxane unit | | | | | |

**Table 2**

| | Silanol group forming silicide SiX₄(C) | | Silanol group forming silicide R²SiY₃(D) | | C/D (molar ratio) |
|---|---|---|---|---|---|
| | Kind | Ratio (molar %) | Kind | Ratio (molar %) | |
| T-1 | SM-1 | 40 | SM-2 | 60 | 40/60 |
| T-2 | SM-1 | 30 | SM-2 | 70 | 30/70, |
| T-3 | SM-1 | 40 | SM-2/SM-3 | 55/5 | 40/60 |
| t-1 | - | - | SM-2 | 100 | 0/100 |

| | | | | | |
|---|---|---|---|---|---|
| In Table 2: C/D: Molar ratio of (Silanol group forming SiX₄)/(Silanol group forming silicide R²SiY₃) SM-1: Tetraethoxy silane SM-2: Methyl trimethoxy silane SM-3: Phenyl trimethoxy silane | | | | | |

**Table 3**

| | Surfactant | | Aqueous suspension | |
|---|---|---|---|---|
| | Kind | Concentration (%) | pH | Solid component concentration (%) |
| T-1 | A-1 | 0.035 | 8.8 | 7.0 |
| T-2 | A-1 | 0.010 | 9.1 | 7.7 |
| T-3 | A-2/N-1 | 0.035/0,007 | 8.3 | 8.5 |
| t-1 | - | - | 7.5 | 10.0 |

| | | | | |
|---|---|---|---|---|
| In Table 3: A-1: Dodecyl benzene sodium sulfonate A-2: Lauryl sodium sulfonate N-1: α-dodecyl-ω-hydroxy poly(oxyethylene) (number of oxyethylene =12) Concentration: Concentration of surfactant in hydrolysis reaction system (%) | | | | |

**Table 4**

| | Parts of Fig. 1 | | | | | | Shape |
|---|---|---|---|---|---|---|---|
| | W₁ | | W₂ | | H | | |
| | Average (µm) | Range (µm) | Average (µm) | Range (µm) | Average (µm) | Range (µm) | |
| T-1 | 2.64 | 1.2 | 3.02 | 1.7 | 1.53 | 0.8 | A |
| T-2 | 0.51 | 0.2 | 0.77 | 0.2 | 0.21 | 0.1 | A |
| T-3 | 7.55 | 1.2 | 8.22 | 1.9 | 4.89 | 1.4 | A |
| t-1 | - | | - | - | | - | B |

| | | | | | | | |
|---|---|---|---|---|---|---|---|
| In Table 4: Range: (Maximum value)-(Minimum value) Shape A: Hollow hemisphere (particle as a whole) Shape B: Solid sphere (particle as a whole) | | | | | | | |

### Part 2: Preparation of optical diffusive polycarbonate resin compositions

### Test Example 1

Organosilicone fine particles (T-1) synthesized in Part 1 (0.6 parts) was added into polycarbonate resin (Panlite K1285 (tradename) produced by Teijin Chemicals Ltd.) (100 parts) and after they were mixed together, they were melted and mixed at resin temperature of 280°C by using a biaxial extruder (40mmΦ) equipped with vent to obtain pellets of polycarbonate resin composition (P-1) of Test Example 1 by extrusion.

### Test Examples 2-8 and Comparison Examples 1-9

Polycarbonate resin compositions of Test Examples 2-8 and Comparison Examples 1-9 were prepared similarly as the preparation of polycarbonate resin compositions of Test Example 1. Details of the polycarbonate resin compositions of each example are shown together in Table 5.

### Part 3: Production of optical diffusive polycarbonate resin moldings and their evaluation

Optical diffusive polycarbonate resin compositions of each example prepared in Part 2 were used in a molding operation by means of a injection molding machine (ROBOSHOT S-2000 (tradename) produced by FANUC Ltd. with rotational speed of screw 80rpm, screw diameter 26mmΦ) with cylinder temperature 280°C, mold temperature 80°C, cooling time 30 seconds and molding cycle 50 seconds to produce 200x500mm test pieces of optical diffusive polycarbonate resin molding with thickness 2mm. These test pieces were evaluated as follows regarding total light transmittance, haze, heat-resistance colorability, modulus in bending and anisotropy of linear expansion. The test results are together shown in Table 5.

### Measurement and evaluation of total light transmittance and haze

Total light transmittance and haze of the test pieces described above were measured according to JIS-K7105 (1981) by using a haze meter (NDH-2000 (tradename) produced by Nippon Denshoku Industries Co., Ltd.) and evaluated according to the following standards:

### Evaluation standards of total light transmittance

- AAA:: Total light transmittance is 0.7 or more
- AA:: Total light transmittance is 0.6 or more and less than 0.7
- A:: Total light transmittance is 0.5 or more and less than 0.6
- B:: Total light transmittance is 0.4 or more and less than 0.5
- C:: Total light transmittance is less than 0.4

### Evaluation standards of haze

- AAA:: Haze is 0.93 or more
- AA:: Haze is 0.91 or more and less than 0.93
- A:: Haze is 0.89 or more and less than 0.91
- B:: Haze is 0.87 or more and less than 0.89
- C:: Haze is less than 0.87

### Measurement and evaluation of heat-resistant colorability

Sample films of 200x200mm were cut out from the aforementioned test pieces and held inside an oven with circulating heated air at 80°C for 180 minutes. The degree of coloration by heating was measured in terms of the b-value by using a color meter (CR-300 (tradename) produced by Minolta Co., Ltd.). The value of Δb was calculated according to JIS-Z8729 (2004) from the formula Δb = b₂ - b₁ where b₁ is the b-value of the sample film before the heat treatment and b₂ is the b-value of the sample film after the heat treatment.

### Evaluation standards of heat-resistant colorability

- AA:: Δb is less than 0.1
- A:: Δb is 0.1 or more and less than 0.5
- B:: Δb is 0.5 or more and less than 2.0
- C:: Δb is 2.0 or more

### Measurement and evaluation of modulus in bending

Sample pieces of 12 x 126mm were cut out from the aforementioned test pieces and modulus in bend was measured on each according to JIS-K7171 (2008) and evaluated according to the following standards.

### Evaluation standards of modulus in bending

- A:: Modulus in bending is 2500MPa or more
- B:: Modulus in bending is less than 2500MPa

### Measurement and evaluation of anisotropy of linear expansion

As each of the same test pieces as described above was subjected to an annealing step at 110°C, a 5x5mm sample piece was cut from its approximately center part of which linear expansion coefficient was measured according to JIS-K7197 (1991). The measurement was carried out in the range of 30°C-110°C and the dimensional change rate between 40°C and 80°C was used to obtain linear expansion coefficient. A thermomechanical analysis apparatus (TA Instrument 2940 (tradename) produced by TA Instruments Inc.) was used for the measurement in two directions, along the flow with respect to the gate and a perpendicular direction thereto). Anisotropy characteristic of the linear expansion coefficient (anisotropy of linear expansion) was calculated as (anisotropy of linear expansion in perpendicular direction) - (anisotropy of linear expansion in the flow direction) and evaluated according to the following standards.

### Evaluation standards of anisotropy of linear expansion

- A:: Anisotropy of linear expansion is less than 0.08
- B:: Anisotropy of linear expansion is 0.08 or more

**Table 5**

| | Light diffusive polycarbonate resin composition | | | Evaluation | | | | |
|---|---|---|---|---|---|---|---|---|
| | Polycarbonate resin | Fine particles such as organosilicone fine particles | | Total light transmittance | Haze | Heat-resistance colorability | Modulus in bending | Anisotropy of linear expansion |
| | Content (part) | Kind | Content (part) | | | | | |
| TE-1 | 100 | T-1 | 0.6 | AAA | AAA | AA | A | A |
| TE-2 | 100 | T-1 | 3.0 | AAA | AAA | AA | A | A |
| TE-3 | 100 | T-2 | 3.0 | AAA | AAA | AA | A | A |
| TE-4 | 100 | T-1 | 6.0 | AA | AAA | AA | A | A |
| TE-5 | 100 | T-1 | 0.4 | AAA | AA | AA | A | A |
| TE-6 | 100 | T-1 | 8.0 | A | AAA | AA | A | A |
| TE-7 | 100 | T-1 | 0.2 | AAA | A | AA | A | A |
| TE-8 | 100 | T-3 | 3.0 | A | A | AA | A | A |
| CE-1 | 100 | t-1 | 0.6 | A | B | AA | A | A |
| CE-2 | 100 | t-2 | 0.6 | A | C | C | A | A |
| CE-3 | 100 | t-3 | 0.6 | B | C | B | A | A |
| CE-4 | 100 | t-4 | 0.6 | B | C | C | A | A |
| CE-5 | 100 | t-5 | 0.6 | B | C | C | A | A |
| CE-6 | 100 | t-6 | 0.6 | B | C | C | A | A |
| CE-7 | 100 | t-7 | 0.6 | B | C | C | A | A |
| CE-8 | 100 | T-1 | 20.0 | B | A | AA | B | B |
| CE-9 | 100 | T-1 | 0.06 | AAA | B | AA | B | A |

| | | | | | | | | |
|---|---|---|---|---|---|---|---|---|
| In Table 5: TE: Test Example CE: Comparison Example T-1 - T-3, t-1: Organosilicone fine particles synthesized in Part 1 t-2: Spherical polystyrene fine particles (Technopolymer SBX-4 (tradename) produced by Sekisui Plastics Co., Ltd.) t-3: Fluorine resin fine particles (L-150J (tradename) produced by Asahi Glass Co., Ltd.) t-4: Biconvex lens-shaped polyacryl fine particles (Techpolymer LMX series (tradename) produced by Sekisui Plastics Co., Ltd.) t-5: Concave polyacryl fine particles (Microsphere M-311 (tradename) produced by Matsumoto Yushi-Seiyaku Co., Ltd.) t-6: Spherical polyacryl fine particles (Technopolymer MBX-4 (tradename) produced by Sekisui Plastics Co., Ltd.) t-7: Aggregated fine particles in powder form comprising polyacryl cross-linked polymer fine particles and polystyrene cross-linked polymer fine particles prepared according to Test Example 1 in Japanese Patent Publication Tokkai 2002-30151. | | | | | | | | |

### Part 4: Preparation of optical diffusive polyacryl resin compositions

### Test Example 9

Optical diffusive polyacryl resin compositions in a pellet form of Test Example 9 were prepared by adding organosilicone fine particles (T-1) synthesized in Part 1 (0.6 parts) to polymethyl methacrylate (ACRYPET VH# 001 (tradename) produced by Mitsubishi Rayon Co., Ltd.) (100 parts) with stirring, thereafter using a biaxial extruder (40mmΦ) equipped with vent to melt and mix them together at resin temperature of 240°C for extrusion.

### Test Examples 10-16 and Comparison Examples 10-18

Optical diffusive polyacryl resin compositions of Test Examples 10-16 and Comparison Examples 10-18 were prepared similarly as the preparation of optical diffusive polyacryl resin compositions of Test Example 9. Details of optical diffusive polyacryl resin compositions of each example are together shown in Table 6.

### Part 5: Production of Optical diffusive polyacryl resin moldings and their evaluation

Optical diffusive polyacryl resin compositions of each example prepared in Part 4 were used in a molding operation by means of a injection molding machine (ROBOSHOT S-2000 (tradename) produced by FANUC Ltd. with rotational speed of screw 80rpm, screw diameter 26mm<P) with cylinder temperature 240°C, mold temperature 70°C, cooling time 25 seconds and molding cycle 45 seconds to produce 200x500mm test pieces of optical diffusive polycarbonate resin molding with thickness 2mm. These test pieces were evaluated as follows regarding total light transmittance, haze, heat-resistance colorability, modulus in bending and anisotropy of linear expansion. The test results are together shown in Table 6.

### Measurement and evaluation of total light transmittance and haze

Total light transmittance and haze of the test pieces described above were measured according to JIS-K7105 (1981) by using a haze meter (NDH-2000 (tradename) produced by Nippon Denshoku Industries Co., Ltd.) and evaluated according to the following standards:

### Evaluation standards of total light transmittance

- AAA:: Total light transmittance is 0.75 or more
- AA:: Total light transmittance is 0.65 or more and less than 0.75
- A:: Total light transmittance is 0.55 or more and less than 0.65
- B:: Total light transmittance is 0.45 or more and less than 0.55
- C:: Total light transmittance is 0.35 or more and less than 0.45

### Evaluation standards of haze

- AAA:: Haze is 0.93 or more
- AA:: Haze is 0.91 or more and less than 0.93
- A:: Haze is 0.89 or more and less than 0.91
- B:: Haze is 0.87 or more and less than 0.89
- C:: Haze is less than 0.87

### Measurement and evaluation of heat-resistant colorability

Sample films of 200x200mm were cut out from the aforementioned test pieces and held inside an oven with circulating heated air at 80°C for 180 minutes. The degree of coloration by heating was measured in terms of the b-value by using a color meter (CR-300 (tradename) produced by Minolta Co., Ltd.). The value of Δb was calculated according to JIS-Z8729 (2004) as described above.

### Evaluation standards of heat-resistant colorability

- AA:: Δb is less than 0.1
- A:: Δb is 0.1 or more and less than 0.5
- B:: Δb is 0.5 or more and less than 2.0
- C:: Δb is 2.0 or more

### Measurement and evaluation of modulus in bending

Sample pieces of 12 x 126mm were cut out from the aforementioned test pieces and modulus in bend was measured on each according to JIS-K7171 (2008) and evaluated according to the following standards.

### Evaluation standards of modulus in bending

- A:: Modulus in bending is 2500MPa or more
- B:: Modulus in bending is less than 2500MPa

### Measurement and evaluation of anisotropy of linear expansion

As each of the same test pieces as described above was subjected to an annealing step at 110°C, a 5x5mm sample piece was cut from its approximately center part of which linear expansion coefficient was measured according to JIS-K7197 (1991). The measurement was carried out in the range of 30°C-110°C and the dimensional change rate between 40°C and 80°C was used to obtain linear expansion coefficient. A thermomechanical analysis apparatus (TA Instrument 2940 (tradename) produced by TA Instruments Inc.) was used for the measurement in two directions, along the flow with respect to the gate and a perpendicular direction thereto). Anisotropy characteristic of the linear expansion coefficient (anisotropy of linear expansion) was calculated as explained above and evaluated according to the following standards.

### Evaluation standards of anisotropy of linear expansion

- A:: Anisotropy of linear expansion is less than 0.1
- B:: Anisotropy of linear expansion is 0.1 or more

**Table 6**

| | Light diffusive polyacryl resin composition | | | Evaluation | | | | |
|---|---|---|---|---|---|---|---|---|
| | Polyacryl resin | Fine particles such as organosilicone fine particles | | Total light transmittance | Haze | Heat-resistance colorability | Modulus in bending | Anisotropy of linear expansion |
| | Content (part) | Kind | Content (part) | | | | | |
| TE-9 | 100 | T-1 | 0.6 | AAA | AAA | AA | A | A |
| TE-10 | 100 | T-1 | 3.0 | AAA | AAA | AA | A | A |
| TE-11 | 100 | T-2 | 3.0 | AAA | AAA | AA | A | A |
| TE-12 | 100 | T-1 | 6.0 | AA | AAA | AA | A | A |
| TE-13 | 100 | T-1 | 0.4 | AAA | AA | AA | A | A |
| TE-14 | 100 | T-1 | 8.0 | A | AAA | AA | A | A |
| TE-15 | 100 | T-1 | 0.2 | AAA | A | AA | A | A |
| TE-16 | 100 | T-3 | 3.0 | A | A | AA | A | A |
| CE-10 | 100 | t-1 | 0.6 | A | B | AA | A | A |
| CE-11 | 100 | t-2 | 0.6 | B | C | C | A | A |
| CE-12 | 100 | t-3 | 0.6 | B | C | B | A | A |
| CE-13 | 100 | t-4 | 0.6 | A | C | C | A | A |
| CE-14 | 100 | t-5 | 0.6 | A | C | C | A | A |
| CE-15 | 100 | t-6 | 0.6 | A | C | C | A | A |
| CE-16 | 100 | t-7 | 0.6 | A | C | C | A | A |
| CE-17 | 100 | T-1 | 20.0 | B | A | AA | B | B |
| Cue-1 8 | 100 | T-1 | 0.06 | AAA | B | AA | B | A |

| | | | | | | | | |
|---|---|---|---|---|---|---|---|---|
| In Table 6: T-1 - T-3, t-1 - t-7: As explained for Table 5 | | | | | | | | |

As shown clearly in Tables 5 and 6, light diffusive resin compositions may be used for obtaining optical diffusive moldings which are superior not only in rigidity and dimensional stability but also in heat resistance, optical transmissivity and optical diffusivity.

## Claims

1. Optical diffusive resin compositions comprising 100 mass parts of a thermoplastic polymer material and 0.1-10 mass parts of organisilicone fine particles, said organosilicone fine particles being each a particle having a hollow hemispherical shape as a whole, having a cross-sectional shape with an inner minor arc, an outer minor arc which covers said inner minor arc and ridge lines connecting ends of said inner minor arc and said outer minor arc, the average width between the end points of said inner minor arc being 0.01-9.µm, the average width between the end points of said outer minor arc being 0.05-µm, and the average of the height of said outer minor arc being 0.015-9µm, wherein the averages are values obtained from arbitrarily selected 100 of said organosilicone fine particles in a scanning electron microscope image thereof.

2. The optical diffusive resin compositions of claim 1 wherein the average width between the end points of said inner minor arc is 0.02-6µm, the average width between the end points of said outer minor arc being 0.06-8µm, and the average of the height of said outer minor arc being 0.03-6µm.

3. The optical diffusive resin compositions of claims 1 or 2 wherein said organosilicone fine particles contain siloxane units shown by SiO₂ and siloxane units shown by R¹SiO_{1.5} at a molar ratio of 30/70 - 70/30 where R¹ is organic group with 1-12 carbon atoms directly connected to a silicon atom.

4. The optical diffusive resin compositions of any of claims 1 to 3 wherein said organosilicone fine particles are produced by using silanol group forming silicide SiX₄ and silanol group forming silicide R²SiY₃ at a molar ratio of 30/70 - 70/30, where R² is an organic group with 1-12 carbon atoms directly connected to a silicon atom and X and Y are each alkoxy group with 1-4 carbon atoms, alkoxyethoxy group having alkoxy group with 1-4 carbon atoms, acyloxy group with 2-4 carbon atoms, N,N-dialkylamino group having alkyl group with 1-4 carbon atoms, hydroxyl group, halogen atom or hydrogen atom, generating silanol compounds by causing said silanol group forming silicide SiX₄ and said silanol group forming silicide R²SiY₃ to contact water in the presence of a catalyst to carry out hydrolysis and then causing a condensation reaction of said silanol compounds.

5. The optical diffusive resin compositions of claim 4 wherein said organosilicone fine particles are produced by causing said silanol group forming silicide SiX₄ and said silanol group forming silicide R²SiY₃ to contact water in the presence of not only said catalyst but also a nonionic surfactant and/or an anionic surfactant.

6. The optical diffusive resin compositions of claim 5 wherein said nonionic surfactant and/or said anionic surfactant is one or more selected from the group consisting of α-alkyl-co-hydroxy (polyoxy alkylene) having oxyethylene group and/or oxypropylene group as oxyalkylene group and organic sulfonates with 8-30 carbon atoms.

7. The optical diffusive resin compositions of any of claims 4 to 6 wherein said organosilicone fine particles are produced from an aqueous suspension with pH adjusted to 8-10 after said silanol compounds undergo said condensation reaction.

8. The optical diffusive resin compositions of any of claims 4 to 7 wherein said organosilicone fine particles are obtained from an aqueous solution containing organosilicone fine particles at a concentration of 2-12 mass % after said condensation reaction of said silanol compounds.

9. The optical diffusive resin compositions of any of claims 1 to 8 containing said organosilicone fine particles in an amount of 0.3-7 mass parts per 100 mass parts of said thermoplastic polymer material.

10. The optical diffusive resin compositions of any of claims 1 to 9 wherein said thermoplastic polymer material is selected from the group consisting of polycarbonate polymer materials, polyacryl polymer materials, polystyrene polymer materials, polyester polymer materials, polyvinyl polymer materials and polyolefin polymer materials.

11. Optical diffusive moldings obtained by molding the optical diffusive resin compositions of any of claims 1 to 10.
